# EUROPEAN PATENT APPLICATION

(11) **EP 4 848 360 A1**
(43) Date of publication of application: **02.12.2026**
(21) Application number: 24921417.2
(22) Date of filing: 05.09.2024
(51) Int. Cl.: H01M 4/36, H01M 4/13, H01M 10/54

(54) **SILICON-CARBON NEGATIVE ELECTRODE MATERIAL AND PREPARATION METHOD THEREFOR, SECONDARY BATTERY, AND ELECTRICAL DEVICE**

(30) Priority: 30.01.2024 CN 202410130127
(71) Applicant: Contemporary Amperex Technology Co., Limited, Ningde, Fujian 352100 (CN)
(72) Inventor: SU, Yingwei, Ningde, Fujian 352100 (CN); WANG, Jiazheng, Ningde, Fujian 352100 (CN); LYU, Zijian, Ningde, Fujian 352100 (CN); LIU, Liangbin, Ningde, Fujian 352100 (CN); XIE, Shuai, Ningde, Fujian 352100 (CN)
(74) Representative: Gong, Jinping
(86) International application number: PCT/CN2024/117129
(87) International publication number: WO 2025/161392

(57) **Abstract**

Provided is a silicon-carbon negative electrode material, comprising a porous carbon matrix and a silicon-based material present in pores of the porous carbon matrix; wherein the volume V_{silicon} of the silicon-based material in the silicon-carbon negative electrode material per unit mass is 0.155 cm³/g-0.175 cm³/g, the interior of the silicon-carbon negative electrode material comprises closed holes, and the volume PV_{closed} of the closed pores in the silicon-carbon negative electrode material per unit mass is greater than or equal to 0.250 cm³/g.

## Description

### CROSS-REFERENCE TO RELATED APPLICATIONS

The present disclosure is based on and claims priority to Chinese Patent Application No. 202410130127.9, filed on January 30, 2024 and entitled "SILICON-CARBON NEGATIVE ELECTRODE MATERIAL AND PREPARATION METHOD THEREFOR, SECONDARY BATTERY, AND ELECTRICAL DEVICE", which is incorporated into the present disclosure by reference in its entirety.

### TECHNICAL FIELD

The present disclosure relates to the technical field of lithium batteries, and particularly relates to a silicon-carbon negative electrode material and a preparation method therefor, a secondary battery, and an electrical device.

### BACKGROUND

In recent years, with increasingly wide use of lithium-ion batteries, lithium-ion batteries have been widely used in energy storage power supply systems such as hydroelectric, thermal, wind, and solar power plants, and many other fields including electric tools, electric bicycles, electric motorcycles, electric vehicles, and aerospace. Due to the great development achieved by lithium-ion batteries, higher requirements have also been placed on their performance.

Increasing the specific capacity of electrode materials is one of the approaches to improve the performance of lithium-ion batteries. Silicon-based negative electrode materials have attracted considerable attention as lithium-ion battery negative electrode materials due to their high specific capacity. However, existing silicon-based negative electrode materials suffer from problems such as high volume expansion ratio and low initial Coulombic efficiency during charging and discharging. This severely limits the widespread application of silicon-based negative electrode materials in lithium-ion batteries.

### SUMMARY OF THE INVENTION

The present disclosure has been made in view of the above-mentioned problems, and an object thereof is to provide a silicon-carbon negative electrode material and a preparation method therefor. The negative electrode material has a relatively small specific surface area and a relatively low volume expansion ratio, thereby improving an initial Coulombic efficiency of the material while exhibiting excellent cycling performance. Another objective of the present disclosure is to provide a secondary battery and an electrical device, each including the negative electrode material.

To achieve the above object, according to a first aspect of the present disclosure, a silicon-carbon negative electrode material is provided, including a porous carbon matrix and a silicon-based material present in pores of the porous carbon matrix; where a volume V_{Si} of the silicon-based material in a unit mass of the silicon-carbon negative electrode material is 0.155 cm³/g to 0.175 cm³/g, closed pores are contained in the silicon-carbon negative electrode material, and a volume PV_{closed} of the closed pores in a unit mass of the silicon-carbon negative electrode material is greater than or equal to 0.250 cm³/g. Accordingly, while containing a certain volume of silicon-based material, the silicon-carbon negative electrode material further provides an appropriate amount of closed pore expansion space reserved for expansion of the silicon-based material. As a result, the negative electrode material has a relatively small specific surface area and a relatively low volume expansion ratio, thereby improving an initial Coulombic efficiency of the material while exhibiting excellent cycling performance.

In some embodiments, the volume V_{Si} of the silicon-based material in a unit mass of the silicon-carbon negative electrode material is 0.159 cm³/g to 0.172 cm³/g; and/or the volume PV_{closed} of the closed pores in a unit mass of the silicon-carbon negative electrode material is 0.253 cm³/g to 0.300 cm³/g.

In some embodiments, an open pore volume PVₒₚₑₙ of the silicon-carbon negative electrode material is 0.008 cm³/g to 0.040 cm³/g. As a result, the open pore volume of the silicon-carbon negative electrode material is small, making the contact area between the negative electrode material and the electrolyte also small, which is beneficial to improving the initial Coulombic efficiency of the material.

In some embodiments, the porous carbon matrix includes mesopores, and a proportion of the mesopores in a total pore volume of the porous carbon matrix is 40% to 75%. By controlling the pore volume proportion of the mesopores within this range, it is beneficial to form an appropriate amount of closed pore expansion space.

In some embodiments, the total pore volume of the porous carbon matrix is 0.5 cm³/g to 1.02 cm³/g. As a result, there is more space in the porous carbon matrix to accommodate silicon crystallites and more space reserved for the expansion of the silicon-based material, while the porous carbon matrix has sufficient strength.

In some embodiments, relative to the total weight of the silicon-carbon negative electrode material, a content C_{Si} of the silicon-based material is 36wt% to 40wt%; and/or a content C_{C} of the porous carbon matrix is 50wt% to 57wt%.

In some embodiments, the silicon-based material includes amorphous silicon or crystalline silicon. In some embodiments, the silicon-based material includes crystalline silicon, and the crystallite size of the crystalline silicon is 3 nm to 6 nm. As a result, silicon crystal clusters, formed from the silicon crystallites, can block entrances of irregular pores in the porous carbon matrix, which is beneficial for the silicon crystal clusters and the pores blocked by them to jointly form closed pore pores.

In some embodiments, the silicon-carbon negative electrode material includes one or more of the following features:
a true density of the silicon-carbon negative electrode material is 1.8 g/cm³ to 2.3 g/cm³;
a tap density of the silicon-carbon negative electrode material is 0.4 g/cm³ to 0.9 g/cm³;
a specific surface area of the silicon-carbon negative electrode material is 2.5m²/g to 12m²/g; and
a specific surface area of the porous carbon matrix is 1000m²/g to 1800m²/g.

In some embodiments, the silicon-carbon negative electrode material further includes a carbon coating layer. The carbon coating layer can improve the conductivity of the silicon-based material and also isolate the electrolyte from contacting the silicon-based material, reducing the occurrence of side reactions.

According to a second aspect of the present disclosure, a method for preparing a silicon-carbon negative electrode material is provided. The method includes:
providing a porous carbon matrix, where the porous carbon matrix includes mesopores, and a proportion of the mesopores in the total pore volume of the porous carbon matrix is less than or equal to 75%;
placing the porous carbon matrix in a reactor;
introducing a first mixed gas including a silicon source gas and a first inert gas into the reactor, where a partial pressure of the silicon source gas is greater than or equal to 0.3, and, calculated based on a mass of silicon element, a mass ratio of the introduced silicon source gas to the porous carbon matrix is less than or equal to 0.95; and
adjusting a gas hourly space velocity of the first mixed gas to less than or equal to 1200 L/kg, under which condition a silicon-based material is deposited in pores of the porous carbon matrix, thereby obtaining the silicon-carbon negative electrode material; where
the silicon-carbon negative electrode material includes a porous carbon matrix and a silicon-based material present in pores of the porous carbon matrix; a volume of the silicon-based material in a unit mass of the silicon-carbon negative electrode material is 0.155 cm³/g to 0.175 cm³/g, closed pores are contained in the silicon-carbon negative electrode material, and a volume of the closed pores in a unit mass of the silicon-carbon negative electrode material is greater than or equal to 0.250 cm³/g.

By controlling the mesopore volume proportion of the porous carbon matrix, the gas hourly space velocity of the first mixed gas, the partial pressure of the silicon source gas, and the mass ratio of the silicon source gas to the porous carbon matrix within specific ranges, a silicon-carbon negative electrode material having a certain content of silicon-based material and an appropriate closed pore expansion space is prepared. The material has a relatively small specific surface area and a relatively low volume expansion ratio, thereby improving an initial Coulombic efficiency of the material while exhibiting excellent cycling performance.

In some embodiments, the proportion of the mesopores in a total pore volume of the porous carbon matrix is 40% to 75%.

In some embodiments, in the first mixed gas, the partial pressure of the silicon source gas is 0.3 to 0.7.

In some embodiments, the mass ratio of the introduced silicon source gas to the porous carbon matrix is 0.78 to 0.95.

In some embodiments, the gas hourly space velocity of the first mixed gas is adjusted to 500 L/kg to 1200 L/kg.

In some embodiments, the total pore volume of the porous carbon matrix is 0.5 cm³/g to 1.02 cm³/g; and/or a specific surface area of the porous carbon matrix is 1000m²/g to 1800m²/g.

In some embodiments, the method satisfies one or more of the following conditions (1) - (4):
(1) the silicon-based material is deposited in pores of the porous carbon matrix under a pressure of 1 kPa to 5 kPa;
(2) a deposition time of the silicon-based material is 5 h to 12 h;
(3) the silicon source gas includes one or more of monosilane, disilane, trisilane, dichlorosilane, trichlorosilane, or tetrachlorosilane; and
(4) the first inert gas includes one or more of nitrogen, argon, helium, or neon.

In some embodiments, the method further includes: after depositing the silicon-based material, introducing a second mixed gas including a carbon source gas and a second inert gas into the reactor to form a carbon coating layer on a surface of the silicon-carbon negative electrode material.

Optionally, the carbon source gas includes one or more of acetylene, ethylene, propylene, methane, ethane, or propane.

Optionally, the second inert gas includes one or more of nitrogen, argon, helium, or neon.

According to a third aspect of the present disclosure, a secondary battery is provided, including a negative electrode sheet, where the negative electrode sheet includes a negative electrode current collector and a negative electrode film layer located on at least one surface of the negative electrode current collector; and the negative electrode film layer includes the silicon-carbon negative electrode material of the first aspect of the present disclosure or a silicon-carbon negative electrode material prepared according to the method of the second aspect of the present disclosure.

According to a fourth aspect of the present disclosure, an electrical device is provided, including the secondary battery of the third aspect of the present disclosure.

An appropriate amount of closed pore space is reserved to accommodate expansion of silicon in the silicon-carbon negative electrode material in the embodiments of the present disclosure. Accordingly, the negative electrode material has a relatively small specific surface area and a relatively low volume expansion ratio, thereby improving an initial Coulombic efficiency of the material while exhibiting excellent cycling performance.

### BRIEF DESCRIPTION OF THE DRAWINGS

FIG. 1 is a schematic structural diagram of a porous carbon matrix without silicon-based material deposited and a schematic structural diagram of a silicon-carbon negative electrode material formed after deposition of a silicon-based material in a porous carbon matrix, according to an embodiment of the present disclosure.
FIG. 2 is a schematic diagram of a battery cell according to an embodiment of the present disclosure.
FIG. 3 is an exploded view of the battery cell according to an embodiment of the present disclosure shown in FIG. 2.
FIG. 4 is a schematic diagram of a battery module according to an embodiment of the present disclosure.
FIG. 5 is a schematic diagram of a battery pack according to an embodiment of the present disclosure.
FIG. 6 is an exploded view of the battery pack according to an embodiment of the present disclosure shown in FIG. 5.
FIG. 7 is a schematic diagram of an electrical device using the secondary battery according to an embodiment of the present disclosure as a power source.

Reference numeral description:
1 battery pack; 2 upper enclosure; 3 lower enclosure; 4 battery module; 5 battery cell; 51 housing; 52 electrode assembly; 53 top cover assembly

### DETAILED DESCRIPTION

The following specifically discloses in detail embodiments of a silicon-carbon negative electrode material and preparation method therefor, a secondary battery, and an electrical device disclosed in the present disclosure with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand the present disclosure and are not intended to limit the subject matter described in the claims.

"Ranges" disclosed in the present disclosure are defined in the form of lower and upper limits and a given range is defined by one lower limit and one upper limit selected, where the selected lower and upper limits define boundaries of that special range. The ranges defined in this manner may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In the present disclosure, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of the present disclosure can be combined with each other to form new technical solutions.

Unless otherwise specified, all technical features and optional technical features of the present disclosure can be combined with each other to form new technical solutions.

Unless otherwise specified, all steps in the present disclosure can be performed sequentially or randomly, preferably sequentially. For example, a method including steps (a) and (b) means that the method may include steps (a) and (b) performed sequentially, or may include steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, terms used in the present disclosure have common meanings generally understood by persons skilled in the art.

Unless otherwise specified, numerical values of various parameters mentioned in the present disclosure may be measured by using various test methods commonly used in the art, for example, may be measured by using the test methods given in the present disclosure.

Unless otherwise specified, in the present disclosure, the term "active ions" refers to ions that can be embedded and de-embedded between the positive electrode and negative electrode of a secondary battery, including but not limited to lithium ions.

In recent years, the application range of lithium-ion batteries has become increasingly widespread. With the widespread application of lithium-ion batteries, higher requirements have also been placed on performance such as energy density and cycling performance of batteries.

Increasing the specific capacity of electrode materials is one of the approaches to improve the performance of lithium-ion batteries. Silicon-based materials have attracted considerable attention as lithium-ion battery negative electrode materials due to their high specific capacity. However, existing silicon-based negative electrode materials suffer from problems such as high volume expansion ratio and low initial Coulombic efficiency during charging and discharging. This severely limits the widespread application of silicon-based negative electrode materials in lithium-ion batteries.

Therefore, providing a silicon-based negative electrode material with a relatively low volume expansion ratio and relatively high initial Coulombic efficiency is still an urgent technical problem to be addressed.

Based on this, the present disclosure proposes a silicon-carbon negative electrode material and a preparation method therefor, a secondary battery, and an electrical device. The following provides a more specific description of the present disclosure and optional embodiments.

[Silicon-carbon negative electrode material]

According to a first aspect of the present disclosure, a silicon-carbon negative electrode material is proposed. The silicon-carbon negative electrode material includes a porous carbon matrix and a silicon-based material present in pores of the porous carbon matrix; where a volume V_{Si} of the silicon-based material in a unit mass of the silicon-carbon negative electrode material is 0.155 cm³/g to 0.175 cm³/g, the silicon-carbon negative electrode material internally includes closed pores, and a volume of the closed pores in a unit mass of the silicon-carbon negative electrode material is greater than or equal to 0.250 cm³/g.

The volume V_{Si} of the silicon-based material in a unit mass of the silicon-carbon negative electrode material is calculated by the following formula (I): ${V}_{Si} = {C}_{Si} \div {ρ}_{Si}$ (I)

In formula (I), C_{Si} represents a content of the silicon-based material relative to the total weight of the silicon-carbon negative electrode material. For example, if the content of the silicon-based material is 40% relative to the total weight of the silicon-carbon negative electrode material, C_{Si} is equal to 40%. The content of the silicon-based material can be measured by methods known in the art, such as inductively coupled plasma emission spectroscopy.

ρ_{Si} represents the density of the silicon-based material. For example, the silicon-based material present in the porous carbon matrix includes amorphous silicon or crystalline silicon. It is well known to those skilled in the art that the density of amorphous silicon or crystalline silicon is 2.33 g/cm³.

"C_{Si}÷ρ_{Si}" represents a volume of the silicon-based material present in the pores of the porous carbon matrix in a unit mass of silicon-carbon negative electrode material, corresponding to the volume V_{Si} of the silicon-based material in a unit mass of silicon-carbon negative electrode material.

Closed pores are contained in the silicon-carbon negative electrode material. Closed pores are sealed pores present in the silicon-carbon negative electrode material, for which pore volume and specific surface area cannot be measured by a nitrogen adsorption method. A volume PV_{closed} of the closed pores in the silicon-carbon negative electrode material can be calculated by the following formula (II): ${PV}_{closed} = \left({C}_{C}\times {PV}_{total}\right) - {PV}_{open} - {V}_{Si}$ (II)

In formula (II), "PVₜₒₜₐₗ" represents a total pore volume of all pores in a unit mass of the porous carbon matrix that can be measured by the nitrogen adsorption method, with the unit of cm³/g.

"C_{C}" represents a content of the porous carbon matrix relative to the total weight of the silicon-carbon negative electrode material. For example, if the content of the porous carbon matrix is 55%, C_{C} is equal to 55%. The content of the porous carbon matrix can be measured by methods known in the art, such as testing with a carbon sulfur analyzer.

"C_{C}×PVₜₒₜₐₗ" represents a total pore volume provided by the porous carbon matrix without silicon-based material deposited in a unit mass of silicon-carbon negative electrode material.

"PVₒₚₑₙ" represents a pore volume of open pores in a unit mass of silicon-carbon negative electrode material, in cm³/g. The "pore volume of open pores in the silicon-carbon negative electrode material" refers to a pore volume that can be measured using a nitrogen adsorption method. Using this method, only pore volumes of pores into which nitrogen can enter can be measured, whereas pore volume of pores into which nitrogen cannot enter cannot be measured. The pores that can be measured by the nitrogen adsorption method are referred to herein as open pores. The pores that cannot be measured by the nitrogen adsorption method are referred to herein as closed pores. In the silicon-carbon negative electrode material of the embodiments of the present disclosure, closed pores having pore volumes that cannot be measured by the nitrogen adsorption method are present. Herein, "PVₒₚₑₙ" does not include pore volumes of the closed pores that cannot be measured by the nitrogen adsorption method.

V_{Si} represents a volume of the silicon-based material in a unit mass of the silicon-carbon negative electrode material, in cm³/g. As described above, V_{Si} can be obtained by formula (I).

In the silicon-carbon negative electrode material, a part of pores in the porous carbon matrix is occupied by the deposited silicon-based material, and another part thereof is blocked by the deposited silicon-based material during the deposition process of the silicon-based material, thereby forming "closed pores". The remaining pores in the porous carbon matrix form open pores of the silicon-carbon negative electrode material, which can be measured using a nitrogen adsorption method.

Accordingly, the volume PV_{closed} of the closed pores in a unit mass of the silicon-carbon negative electrode material can be obtained by subtracting the volume of the silicon-based material deposited therein and the volume of the open pores in the silicon-carbon negative electrode material from the pore volume of the porous carbon matrix in a unit mass of the silicon-carbon negative electrode material, as shown in the above formula (II).

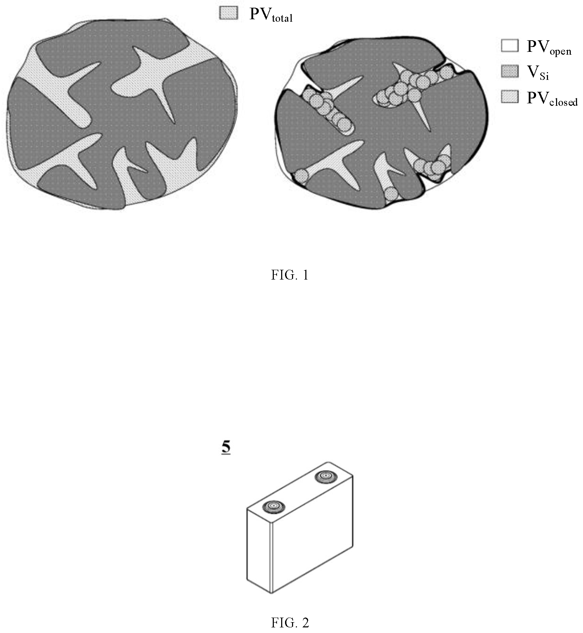

FIG. 1 schematically shows a structural diagram (left diagram) of a porous carbon matrix without silicon-based material deposited according to an embodiment of the present disclosure and a structural diagram (right diagram) of a silicon-carbon negative electrode material formed after deposition of the silicon-based material in the porous carbon matrix. In the left diagram of FIG. 1, the total pore volume of the porous carbon matrix used to form the negative electrode silicon-carbon negative electrode material is represented as "PVₜₒₜₐₗ". In the right diagram of FIG. 1, the pore volume of closed pores in a unit mass of the negative electrode silicon-carbon material is represented as PV_{closed}, the pore volume of open pores is represented as PVₒₚₑₙ, and the volume occupied by the silicon-based material is represented as V_{Si}. As shown in FIG. 1, after deposition of the silicon-based material, the pores of the porous carbon matrix are divided into three parts: one part is closed pore pores that are not connected to the outside, and this part of pores cannot be measured by the nitrogen adsorption method; one part is the volume V_{Si} occupied by the deposited silicon-based material, and this part can be calculated from the content and density of the silicon-based material; and the remaining part is open pores connected to the outside, and this part of pores can be measured by the nitrogen adsorption method. Therefore, for a unit mass of silicon-carbon negative electrode material, the volume PV_{closed} of the internal closed pores can be obtained by subtracting the volume occupied by the silicon-based material and the volume of open pores PVₒₚₑₙ from the pore volume of the porous carbon matrix.

In the silicon-carbon negative electrode material of the embodiments of the present disclosure, for a silicon-based material with a volume of 0.155 cm³/g to 0.175 cm³/g, there is a closed pore volume greater than or equal to 0.250 cm³/g. As a result, an appropriate amount of closed pore expansion space is provided for the silicon-based material present in the pores of the porous carbon matrix. Therefore, for a silicon-carbon negative electrode material containing a certain content of silicon-based material, the silicon-carbon negative electrode material of the embodiments of the present disclosure has a relatively small specific surface area and a relatively low volume expansion ratio, thereby improving an initial Coulombic efficiency of the material while exhibiting excellent cycling performance.

In the present disclosure, the terms "pore volume", "pore capacity", "volume of pores", "volume of pore spaces" have the same meaning and may be used interchangeably.

In some embodiments, the volume V_{Si} of the silicon-based material in a unit mass of the silicon-carbon negative electrode material may be 0.155 cm³/g to 0.175 cm³/g, optionally 0.159 cm³/g to 0.172 cm³/g. For example, V_{Si} may be 0.155 cm³/g, 0.159 cm³/g, 0.160 cm³/g, 0.163 cm³/g, 0.165 cm³/g, 0.167 cm³/g, 0.170 cm³/g, 0.172 cm³/g, 0.175 cm³/g, or a value between any two of these values, but is not limited thereto.

In some embodiments, the volume PV_{closed} of the closed pores in a unit mass of the silicon-carbon negative electrode material may be 0.253 cm³/g to 0.350 cm³/g, 0.253 cm³/g to 0.300 cm³/g, 0.255 cm³/g to 0.300 cm³/g. For example, PV_{closed} may be 0.253 cm³/g, 0.255 cm³/g, 0.260 cm³/g, 0.265 cm³/g, 0.266 cm³/g, 0.270 cm³/g, 0.274 cm³/g, 0.275 cm³/g, 0.280 cm³/g, 0.285 cm³/g, 0.287 cm³/g, 0.290 cm³/g, 0.295 cm³/g, 0.300 cm³/g, 0.349 cm³/g, 0.350 cm³/g, or a value between any two of these values, but is not limited thereto.

In some embodiments, the open pore volume PVₒₚₑₙ of the silicon-carbon negative electrode material may be 0.008 cm³/g to 0.040 cm³/g, optionally 0.022 cm³/g to 0.038 cm³/g. For example, the open pore volume of the silicon-carbon negative electrode material may be 0.008 cm³/g, 0.009 cm³/g, 0.01 cm³/g, 0.015 cm³/g, 0.016 cm³/g, 0.017 cm³/g, 0.019 cm³/g, 0.02 cm³/g, 0.022 cm³/g, 0.025 cm³/g, 0.026 cm³/g, 0.03 cm³/g, 0.031 cm³/g, 0.034 cm³/g, 0.035 cm³/g, 0.038 cm³/g, 0.039 cm³/g, 0.040 cm³/g, or a value between any two of these values, but is not limited thereto.

The open pore volume of the silicon-carbon negative electrode material refers to the pore volume that can be measured using a nitrogen adsorption method. Using the nitrogen adsorption method, only pore volume of open pores into which nitrogen can enter can be measured, whereas pore volume of closed pores into which nitrogen cannot enter cannot be measured.

During the first charge of the battery, a solid electrolyte interphase film (SEI film) is formed at the interface between the negative electrode material and a liquid electrolyte. Formation of the SEI film consumes a portion of lithium ions, and the lithium ions become inactive lithium ions after participating in the SEI film formation reaction. A larger contact area between the negative electrode material and the liquid electrolyte leads to formation of a larger SEI film area and consumption of a greater amount of inactive lithium ions, leading to a decrease in the initial Coulombic efficiency of the battery. In the embodiments of the present disclosure, the silicon-carbon negative electrode material has a relatively small open pore volume, such that a contact area between the negative electrode material and the electrolyte is also relatively small, which is beneficial to improving the initial Coulombic efficiency of the material.

By controlling the open pore volume of the silicon-carbon negative electrode material within the above range, an appropriate amount of open pore expansion space can be provided for the silicon-based material, and a contact area between the negative electrode material and a liquid electrolyte can be effectively controlled, such that excessive contact area between the negative electrode material and the liquid electrolyte does not result in consumption of an increased amount of Li to form a solid electrolyte interphase film, thereby adversely affecting the initial Coulombic efficiency.

In some embodiments, the silicon-based material includes amorphous silicon or crystalline silicon. In some embodiments, the silicon-based material includes crystalline silicon, and the crystallite size of the crystalline silicon is 3 nm to 6 nm, optionally 3 nm to 5 nm. For example, the size of the silicon crystallites may be 3 nm, 4 nm, 5 nm, or 6 nm, but is not limited thereto.

The size D of silicon crystallites can be calculated using the Scherrer formula. The Scherrer formula can be expressed as D=0.89λ/βcosθ, where λ is an X-ray wavelength of 0.154056 nm, β is a full width at half maximum of a diffraction peak, generally selected from a first diffraction peak of silicon (around 28.6°), and θ is a diffraction angle. In the silicon-carbon negative electrode material of the embodiments of the present disclosure, the silicon crystallites have a relatively large size. Referring to FIG. 1, it can be seen that silicon crystal clusters formed from the silicon crystallites having a relatively large crystallite size block entrances of irregular pores of the porous carbon matrix, and the silicon crystal clusters together with the pores blocked thereby jointly form closed pores. As a result, the number of closed pores in the material is increased, and the specific surface area of the negative electrode material is reduced, thereby providing an appropriate amount of closed pore space to accommodate expansion of the silicon-based material while reducing a contact area between the negative electrode material and a liquid electrolyte. This is beneficial to reducing the volume expansion ratio of the negative electrode material and improving the initial Coulombic efficiency of the negative electrode material.

In some embodiments, the true density of the silicon-carbon negative electrode material may be 1.8 g/cm³ to 2.3 g/cm³, optionally 1.99 g/cm³ to 2.2 g/cm³, optionally 2.0 g/cm³ to 2.2 g/cm³. For example, the true density of the silicon-carbon negative electrode material may be 1.8 g/cm³, 1.9 g/cm³, 2.0 g/cm³, 2.01 g/cm³, 2.02 g/cm³, 2.03 g/cm³, 2.1 g/cm³, 2.2 g/cm³, 2.3 g/cm³, or a value between any two of these values, but is not limited thereto.

True density has a meaning well known in the art and can be measured using instruments and methods known in the art. For example, it can be measured with reference to the method in GB/T 24586-2009.

In some embodiments, the tap density of the silicon-carbon negative electrode material may be 0.4 g/cm³ to 0.9 g/cm³, optionally 0.5 g/cm³ to 0.71 g/cm³. For example, the tap density of the silicon-carbon negative electrode material may be 0.4 g/cm³, 0.5 g/cm³, 0.6 g/cm³, 0.61 g/cm³, 0.62 g/cm³, 0.63 g/cm³, 0.64 g/cm³, 0.65 g/cm³, 0.66 g/cm³, 0.67 g/cm³, 0.68 g/cm³, 0.69 g/cm³, 0.70 g/cm³, 0.71 g/cm³, 0.8 g/cm³, 0.9 g/cm³, or a value between any two of these values, but is not limited thereto.

Tap density has a meaning well known in the art and can be measured using instruments and methods known in the art. For example, it can be measured with reference to GB/T 5162-2006.

In some embodiments, the specific surface area of the silicon-carbon negative electrode material may be 2.5 m²/g to 12 m²/g. For example, the specific surface area of the silicon-carbon negative electrode material may be 2.5 m²/g, 3 m²/g, 4 m²/g, 5 m²/g, 5.4 m²/g, 5.8 m²/g, 6 m²/g, 6.3 m²/g, 7 m²/g, 8 m²/g, 8.2 m²/g, 8.8 m²/g, 9 m²/g, 10 m²/g, 11 m²/g, 12 m²/g, or a value between any two of these values, but is not limited thereto.

The specific surface area of the silicon-carbon negative electrode material refers to the surface area of open pores that can be measured by a nitrogen adsorption method. The surface area inside the closed pores of the silicon-carbon negative electrode material cannot be measured by the nitrogen adsorption method.

In these embodiments, the silicon-carbon negative electrode material has a relatively small specific surface area. A relatively small specific surface area indicates that there are fewer open pores in the silicon-carbon negative electrode material. Although the mechanism is not yet clear, the present disclosure finds that the silicon-based material exists in the porous carbon matrix as relatively large silicon crystal clusters. These relatively large silicon crystal clusters block the entrances of irregular pores in the porous carbon matrix without being deposited at the bottom of the pores through the entrances of these irregular pores. Therefore, the silicon-carbon negative electrode material has an appropriate number of closed pores and also a relatively small specific surface area. The right diagram of FIG. 1 shows a schematic structural diagram of a silicon-carbon negative electrode material formed after deposition of silicon in the porous carbon matrix. Referring to FIG. 1, it can be seen that silicon crystal clusters formed from the silicon crystallites having a relatively large crystallite size block entrances of irregular pores of the porous carbon matrix, and the silicon crystal clusters together with the pores blocked thereby jointly form closed pores. As a result, the number of closed pores in the material is increased, and the specific surface area of the material is reduced.

During the first charge of the battery, a solid electrolyte interphase film (SEI film) is formed at the interface between the negative electrode material and a liquid electrolyte. Formation of the SEI film consumes a portion of lithium ions, and the lithium ions become inactive lithium ions after participating in the SEI film formation reaction. A larger contact area between the negative electrode material and the liquid electrolyte leads to formation of a larger SEI film area and consumption of a greater amount of inactive lithium ions, leading to a decrease in the initial Coulombic efficiency of the battery. In the embodiments of the present disclosure, the silicon-carbon negative electrode material has a relatively small specific surface area, such that a contact area between the negative electrode material and the electrolyte is also relatively small, which is beneficial to improving the initial Coulombic efficiency of the material.

In some embodiments, the porous carbon matrix includes mesopores. In some embodiments, the porous carbon matrix includes micropores, mesopores, and macropores. In some embodiments, a proportion of mesopores in the total pore volume of the porous carbon matrix is 40% to 75%, optionally 50% to 75%, optionally 60% to 75%.

Micropores refer to pores with a pore diameter less than 2 nm, mesopores refer to pores with a pore diameter between 2 nm and 50 nm, and macropores refer to pores with a pore diameter greater than 50 nm. The proportion of mesopores in the total pore volume of the porous carbon matrix refers to a percentage of a mesopore volume relative to the total pore volume of the porous carbon matrix. In some embodiments, the proportion of mesopores in the total pore volume of the porous carbon matrix may be 40% to 75%, optionally 50% to 75%, optionally 60% to 75%. For example, the proportion of mesopores in the total pore volume of the porous carbon matrix may be 40%, 45%, 50%, 55%, 60%, 62%, 65%, 70%, 74%, 75%, or a value between any two of these values, but is not limited thereto. By controlling the proportion of mesopores in the total pore volume of the porous carbon matrix within the above range, it is beneficial to controllably form closed pores in the silicon-carbon negative electrode material.

Generally speaking, the activation pore-forming process of porous carbon can only regulate open pores, while closed pores therein are usually inherent to the raw materials or generated by carbon rearrangement under high temperature treatment, and the homogeneity of closed porosity in the porous carbon matrix is difficult to control. In some embodiments, the porous carbon matrix itself does not include closed pores. As a result, the closed pores in the silicon-carbon negative electrode material of the embodiments of the present disclosure are all closed pores formed during a silicon deposition process, so the closed pore volume is controllably formed through the silicon deposition process. By controllably forming the closed pore volume, an appropriate amount of closed pore expansion space is reserved for the expansion of the silicon-based material, achieving the effect of lower volume expansion ratio for the silicon-carbon negative electrode material containing a certain content of silicon-based material.

In some embodiments, the proportion of micropores in the total pore volume of the porous carbon matrix may be 15% to 50%. For example, the proportion of micropores in the total pore volume of the porous carbon matrix may be 15%, 20%, 30%, 40%, 50%, or a value between any two of these values, but is not limited thereto. The proportion of micropores in the total pore volume of the porous carbon matrix refers to a percentage of a micropore volume relative to the total pore volume of the porous carbon matrix. By controlling the proportion of micropores in the total pore volume of the porous carbon matrix within a relatively small range, it is beneficial for the porous carbon matrix to have relatively strong strength. In addition, micropores have a strong catalytic effect on the silicon source gas used for depositing the silicon-based material, and excessive micropores lead to poor controllability of the decomposition reaction of the silicon source gas. Optionally, the proportion of micropores in the total pore volume of the porous carbon matrix is relatively low.

In some embodiments, the proportion of macropores in the total pore volume of the porous carbon matrix may be 1% to 10%. For example, the proportion of macropores in the total pore volume of the porous carbon matrix may be 1%, 2%, 3%, 4%, 5%, 6%, 7%, 8%, 9%, 10%, or a value between any two of these values, but is not limited thereto. The proportion of macropores in the total pore volume of the porous carbon matrix refers to a percentage of the macropore volume relative to the total pore volume of the porous carbon matrix. Optionally, the proportion of macropores in the total pore volume of the porous carbon matrix is relatively low.

In some embodiments, the total pore volume of the porous carbon matrix is 0.5 cm³/g to 1.02 cm³/g, optionally 0.78 cm³/g to 0.89 cm³/g, optionally 0.78 cm³/g to 0.85 cm³/g. For example, the total pore volume of the porous carbon matrix may be 0.5 cm³/g, 0.6 cm³/g, 0.7 cm³/g, 0.8 cm³/g, 0.84 cm³/g, 0.89 cm³/g, 0.9 cm³/g, 0.92 cm³/g, 1.0 cm³/g, 1.02 cm³/g, or a value between any two of these values, but is not limited thereto.

The total pore volume of the porous carbon matrix includes a sum of pore volumes of micropores, mesopores, and macropores. The pore volume of the porous carbon matrix is greater than or equal to 0.5 cm³/g, optionally greater than or equal to 0.78 cm³/g, so there is more space in the porous carbon matrix to accommodate silicon crystal clusters and more space reserved for the expansion of the silicon-based material. The pore volume of the porous carbon matrix is less than or equal to 1.02 cm³/g, optionally less than or equal to 0.89 cm³/g, so the porous carbon matrix has sufficient strength, and the negative electrode material does not fracture under external force during the subsequent full cell preparation process, which would otherwise result in silicon dissolution.

In some embodiments, the specific surface area of the porous carbon matrix may be 1000 m²/g to 1800 m²/g, optionally 1200 m²/g to 1500 m²/g, optionally 1200 m²/g to 1400 m²/g. For example, the specific surface area of the porous carbon matrix may be 1000 m²/g, 1100 m²/g, 1200 m²/g, 1300 m²/g, 1310 m²/g, 1400 m²/g, 1423 m²/g, 1454 m²/g, 1500 m²/g, 1600 m²/g, 1700 m²/g, 1800 m²/g, or a value between any two of these values, but is not limited thereto.

The specific surface area of the porous carbon matrix includes a sum of the specific surface areas of micropores, mesopores, and macropores. The specific surface area of the porous carbon matrix is less than or equal to 1800 m²/g, optionally less than or equal to 1500 m²/g, optionally less than or equal to 1400 m²/g, thereby reducing the surface energy of the porous carbon matrix and improving the controllability of the silicon source gas decomposition reaction. The specific surface area of the porous carbon matrix is greater than or equal to 1000 m²/g, optionally greater than or equal to 1200 m²/g, so there is more space in the porous carbon matrix to accommodate silicon crystal clusters and more space reserved for the expansion of the silicon-based material.

In some embodiments, relative to the total weight of the silicon-carbon negative electrode material, a content C_{Si} of the silicon-based material may be 36wt% to 41wt%, optionally 36wt% to 40wt%; and/or a content C_{C} of the porous carbon matrix may be 50wt% to 57wt%. For example, the content of the porous carbon matrix can be obtained by testing with a carbon sulfur analyzer. For example, after surface passivation of the porous carbon matrix on which the silicon-based material is deposited, a carbon element content therein is measured using a carbon sulfur analyzer, thereby obtaining the content of the porous carbon matrix.

In some embodiments, the silicon-carbon negative electrode material further includes a carbon coating layer. The carbon coating layer can improve the conductivity of the silicon-based material. In addition, the carbon coating layer can also isolate the liquid electrolyte from contact with the silicon-based material, reducing the occurrence of side reactions, which is beneficial to forming a stable and uniform solid electrolyte interphase film.

In some embodiments, relative to the total weight of the silicon-carbon negative electrode material, a content of the carbon coating layer may be 2wt% to 5wt%. For example, relative to the total weight of the silicon-carbon negative electrode material, the content of the carbon coating layer may be 2wt%, 3wt%, 4wt%, 5wt%, or a value between any two of these values, but is not limited thereto. By controlling the content of the carbon coating layer within the above range, it is beneficial to form a complete carbon coating layer. This effectively serves to isolate the liquid electrolyte while avoiding any adverse impact on the capacity of the silicon-carbon negative electrode material.

The content of the carbon coating layer can be determined, for example, by testing with a carbon sulfur analyzer. For example, the carbon element content in the silicon-carbon negative electrode material is measured using a carbon sulfur analyzer, that is, a sum of the carbon contents in the porous carbon matrix and the carbon coating layer relative to the silicon-carbon negative electrode material. Combined with the content of the porous carbon matrix obtained by testing as described above, the content of the carbon coating layer can be obtained through calculation.

[Method for preparing silicon-carbon negative electrode material]

According to a second aspect of the present disclosure, a method for preparing a silicon-carbon negative electrode material is proposed. The method includes:
providing a porous carbon matrix, where the porous carbon matrix includes mesopores, and the proportion of the mesopores in the total pore volume of the porous carbon matrix is less than or equal to 75%;
placing the porous carbon matrix in a reactor;
introducing a first mixed gas including a silicon source gas and a first inert gas into the reactor, where a partial pressure of the silicon source gas is greater than or equal to 0.3, and, based on a mass of silicon element, a mass ratio M_{Si}/M_{C} of the introduced silicon source gas to the porous carbon matrix is less than or equal to 0.95; and
adjusting a gas hourly space velocity of the first mixed gas to less than or equal to 1200 L/kg, under which condition a silicon-based material is deposited in pores of the porous carbon matrix, thereby obtaining the silicon-carbon negative electrode material; where
the silicon-carbon negative electrode material includes a porous carbon matrix and a silicon-based material present in the pores of the porous carbon matrix; a volume of the silicon-based material in a unit mass of the silicon-carbon negative electrode material is 0.155 cm³/g to 0.175 cm³/g, closed pores are contained in the silicon-carbon negative electrode material, and a volume of the closed pores in a unit mass of the silicon-carbon negative electrode material is greater than or equal to 0.250 cm³/g.

Although the mechanism is not yet clear, the present disclosure finds that by selecting the proportion of mesopore volume, adjusting the gas hourly space velocity of the first mixed gas to a specific range, controlling the partial pressure of the silicon source gas, and controlling the mass ratio of the silicon source gas to the porous carbon matrix, the size of silicon crystallites can be adjusted to form silicon crystal clusters with a relatively large crystallite size. Silicon crystal clusters formed from the silicon crystallites having a relatively large crystallite size block entrances of irregular pores of the porous carbon matrix, and the silicon crystal clusters together with the pores blocked thereby jointly form closed pores. As a result, an appropriate amount of closed pore expansion space is reserved for the expansion of the silicon-based material, achieving the effect of lower volume expansion ratio for the silicon-carbon negative electrode material containing a certain content of silicon-based material.

"Gas hourly space velocity" has a meaning well known in the art and can be measured using instruments and methods known in the art. For example, the gas volume passing through per unit time is controlled using a mass flow meter, and gas hourly space velocity = volume (L) of first mixed gas passing through the porous carbon matrix in 1 hour / mass (kg) of the porous carbon matrix.

In the above method, the gas hourly space velocity of the first mixed gas may be adjusted to 500 L/kg to 1200 L/kg, optionally 550 L/kg to 1100 L/kg. For example, the gas hourly space velocity of the first mixed gas may be adjusted to 500 L/kg, 600 L/kg, 700 L/kg, 800 L/kg, 900 L/kg, 1000 L/kg, 1050 L/kg, 1100 L/kg, 1200 L/kg, or a value between any two of these values, but is not limited thereto.

In the above method, the step of adjusting the gas hourly space velocity of the first mixed gas to less than or equal to 1200 L/kg may include: measuring a gas hourly space velocity of the first mixed gas, and then making adjustment based on the test results. If the test result is greater than 1200 L/kg, the gas hourly space velocity of the first mixed gas is reduced.

In the above method, the step of adjusting the gas hourly space velocity of the first mixed gas to 500 L/kg to 1200 L/kg may include: measuring a gas hourly space velocity of the first mixed gas, and then making adjustment based on the test results. If the test result is less than 500 L/kg, the gas hourly space velocity of the first mixed gas is increased; and if the test result is greater than 1200 L/kg, the gas hourly space velocity of the first mixed gas is reduced.

In the above method, based on a mass of silicon element in the silicon source gas, a mass ratio of the introduced silicon source gas to the porous carbon matrix may be 0.78 to 0.95, optionally 0.80 to 0.93, optionally 0.80 to 0.86. For example, it may be 0.78, 0.80, 0.82, 0.84, 0.86, 0.88, 0.90, 0.92, 0.93, 0.95, or a value between any two of these values, but is not limited thereto.

"Partial pressure of gas" has a meaning well known in the art and refers to a pressure proportion of a certain component gas in the mixed gas, and can be measured using instruments and methods known in the art. For example, the partial pressure of a component gas can be regulated by controlling the flow rates of the component gas and the carrier gas introduced into the reactor per unit time. The measurement and control of flow rates can be achieved using a mass flow meter (for example, model Alicat DODA). The partial pressure of gas is related to the volume concentration of the component gas in the mixed gas. For example, when the volume concentration of a certain component gas in the mixed gas is 50%, the partial pressure of the component gas can be calculated as 0.5 according to the ideal gas state equation.

In some embodiments, in the first mixed gas, the partial pressure of the silicon source gas may be 0.3 to 0.7, optionally 0.3 to 0.5. For example, the partial pressure of the silicon source gas may be 0.3, 0.33, 0.4, 0.5, 0.6, 0.7, or a value between any two of these values, but is not limited thereto. The partial pressure of the silicon source gas affects the deposition mode of the silicon source gas. When the partial pressure is relatively high, the deposition mode is dominated by self-nucleation deposition; when the partial pressure is relatively low, the deposition mode is dominated by chemical growth deposition, thereby affecting the silicon crystallite size and silicon crystallite cluster size. By controlling the partial pressure of the silicon source gas within the above range, the deposition mode is dominated by self-nucleation deposition, which is beneficial to forming silicon crystallites of the required size, and thus controllably forming the closed pore volume.

In some embodiments, the porous carbon matrix includes mesopores. In some embodiments, the porous carbon matrix includes micropores, mesopores, and macropores. In some embodiments, a proportion of mesopores in the total pore volume of the porous carbon matrix may be 40% to 75%, optionally 50% to 75%, optionally 60% to 75%.

Micropores refer to pores with a pore diameter less than 2 nm, mesopores refer to pores with a pore diameter between 2 nm and 50 nm, and macropores refer to pores with a pore diameter greater than 50 nm. The proportion of mesopores in the total pore volume of the porous carbon matrix refers to a percentage of a mesopore volume relative to the total pore volume of the porous carbon matrix. In some embodiments, the proportion of mesopores in the total pore volume of the porous carbon matrix may be 40% to 75%, optionally 50% to 75%, optionally 60% to 75%. For example, the proportion of mesopores in the total pore volume of the porous carbon matrix may be 40%, 45%, 50%, 55%, 60%, 62%, 65%, 70%, 74%, 75%, or a value between any two of these values, but is not limited thereto. By controlling the proportion of mesopores in the total pore volume of the porous carbon matrix within the above range, it is beneficial to controllably form closed pores in the silicon-carbon negative electrode material.

Generally speaking, the activation pore-forming process of porous carbon can only regulate open pores, while closed pores therein are usually inherent to the raw materials or generated by carbon rearrangement under high temperature treatment, and the homogeneity of closed porosity in the porous carbon matrix is difficult to control. In some embodiments, the porous carbon matrix itself does not include closed pores. As a result, the closed pores in the silicon-carbon negative electrode material of the embodiments of the present disclosure are all closed pores formed during the silicon deposition process, so the closed pore volume is controllably formed through the silicon deposition process. By controllably forming the closed pore volume, an appropriate amount of closed pore expansion space is reserved for the expansion of the silicon-based material, achieving the effect of lower volume expansion ratio for the silicon-carbon negative electrode material containing a certain content of silicon-based material.

In some embodiments, the proportion of micropores in the total pore volume of the porous carbon matrix may be 15% to 50%. For example, the proportion of micropores in the total pore volume of the porous carbon matrix may be 15%, 20%, 30%, 40%, 50%, or a value between any two of these values, but is not limited thereto. The proportion of micropores in the total pore volume of the porous carbon matrix refers to a percentage of a micropore volume relative to the total pore volume of the porous carbon matrix. By controlling the proportion of micropores in the total pore volume of the porous carbon matrix within a relatively small range, it is beneficial for the porous carbon matrix to have relatively strong strength. In addition, micropores have a strong catalytic effect on the silicon source gas used for depositing the silicon-based material, and excessive micropores lead to poor controllability of the decomposition reaction of the silicon source gas. Optionally, the proportion of micropores in the total pore volume of the porous carbon matrix is relatively low.

In some embodiments, the proportion of macropores in the total pore volume of the porous carbon matrix may be 1% to 10%. For example, the proportion of macropores in the total pore volume of the porous carbon matrix may be 1%, 2%, 3%, 4%, 5%, 6%, 7%, 8%, 9%, 10%, or a value between any two of these values, but is not limited thereto. The proportion of macropores in the total pore volume of the porous carbon matrix refers to a percentage of the macropore volume relative to the total pore volume of the porous carbon matrix. Optionally, the proportion of macropores in the total pore volume of the porous carbon matrix is relatively low.

In some embodiments, the total pore volume of the porous carbon matrix is 0.5 cm³/g to 1.02 cm³/g, optionally 0.78 cm³/g to 0.89 cm³/g, optionally 0.78 cm³/g to 0.85 cm³/g. For example, the total pore volume of the porous carbon matrix may be 0.5 cm³/g, 0.6 cm³/g, 0.7 cm³/g, 0.8 cm³/g, 0.84 cm³/g, 0.89 cm³/g, 0.9 cm³/g, 0.92 cm³/g, 1.0 cm³/g, 1.02 cm³/g, or a value between any two of these values, but is not limited thereto.

The total pore volume of the porous carbon matrix includes a sum of pore volumes of micropores, mesopores, and macropores. The pore volume of the porous carbon matrix is greater than or equal to 0.5 cm³/g, optionally greater than or equal to 0.78 cm³/g, so there is more space in the porous carbon matrix to accommodate silicon crystallites and more space reserved for the expansion of the silicon-based material. The pore volume of the porous carbon matrix is less than or equal to 1.02 cm³/g, optionally less than or equal to 0.89 cm³/g, so the porous carbon matrix has sufficient strength, and the negative electrode material does not fracture under external force during the subsequent full cell preparation process, which would otherwise result in silicon dissolution.

In some embodiments, the specific surface area of the porous carbon matrix may be 1000 m²/g to 1800 m²/g, optionally 1200 m²/g to 1500 m²/g, optionally 1200 m²/g to 1400 m²/g. For example, the specific surface area of the porous carbon matrix may be 1000 m²/g, 1100 m²/g, 1200 m²/g, 1300 m²/g, 1310 m²/g, 1400 m²/g, 1423 m²/g, 1454 m²/g, 1500 m²/g, 1600 m²/g, 1700 m²/g, 1800 m²/g, or a value between any two of these values, but is not limited thereto.

The specific surface area of the porous carbon matrix includes a sum of the specific surface areas of micropores, mesopores, and macropores. The specific surface area of the porous carbon matrix is less than or equal to 1800 m²/g, optionally less than or equal to 1500 m²/g, optionally less than or equal to 1400 m²/g, thereby reducing the surface energy of the porous carbon matrix and improving the controllability of the silicon source gas decomposition reaction. The specific surface area of the porous carbon matrix is greater than or equal to 1000 m²/g, optionally greater than or equal to 1200 m²/g, so there is more space in the porous carbon matrix to accommodate silicon crystal clusters and more space reserved for the expansion of the silicon-based material.

In some embodiments, the silicon-based material may be deposited in pores of the porous carbon matrix under a pressure of 1 kPa to 5 kPa. For example, the silicon-based material may be deposited in pores of the porous carbon matrix under a pressure of 1 kPa to 2 kPa, but is not limited thereto.

In some embodiments, the deposition time of the silicon-based material may be 5 h to 12 h. For example, the deposition time of the silicon-based material may be 5 h, 6 h, 7 h, 8 h, 9 h, 10 h, 11 h, 12 h, or a value between any two of these values, but is not limited thereto. The deposition time of the silicon-based material refers to a duration from the start of introducing the silicon source gas to the stop of introducing the silicon source gas.

In some embodiments, the silicon source gas may be a silicon-containing substance commonly used in the art for depositing silicon-based materials. In some embodiments, the silicon source gas may include one or more of monosilane, disilane, trisilane, dichlorosilane, trichlorosilane, or tetrachlorosilane. Optionally, the silicon source gas may include or be monosilane.

The first inert gas may be an inert gas commonly used in the art. For example, the first inert gas may include one or more of nitrogen, argon, helium, or neon. In some embodiments, the first inert gas may include or be nitrogen.

In some embodiments, the silicon-based material may be deposited in pores of the porous carbon matrix at a temperature of 500°C to 800°C. For example, the silicon-based material may be deposited in pores of the porous carbon matrix at a temperature of 500°C, 550°C, 600°C, 700°C, 800°C, or a value between any two of these values.

In some embodiments, the method further includes: after depositing the silicon-based material, introducing a second mixed gas including a carbon source gas and a second inert gas into the reactor to form a carbon coating layer on a surface of the silicon-carbon negative electrode material. As a result, a carbon coating layer can be formed on the porous carbon matrix deposited with the silicon-based material. The carbon coating layer can improve the conductivity of the silicon-based material. In addition, the carbon coating layer can also isolate the liquid electrolyte from contact with the silicon-based material, reducing the occurrence of side reactions, which is beneficial to forming a stable and uniform solid electrolyte interphase film.

In some embodiments, the partial pressure of the carbon source gas in the second mixed gas is greater than or equal to 0.3, optionally greater than or equal to 0.4, optionally greater than or equal to 0.5, optionally 0.45 to 0.7.

In some embodiments, the gas hourly space velocity of the second mixed gas is adjusted to 100 L/kg to 300 L/kg, optionally 200 L/kg to 260 L/kg, under which condition carbon is coated on the porous carbon matrix with silicon-based material deposited in the pores. The gas hourly space velocity of the second mixed gas can be adjusted to 100 L/kg, 150 L/kg, 200 L/kg, 250 L/kg, 300 L/kg, or a value between any two of these values, but is not limited thereto. By adjusting the partial pressure of the carbon source gas and/or the gas hourly space velocity of the second mixed gas within the above range, it is beneficial to form a complete carbon coating layer. This effectively serves to isolate the liquid electrolyte while avoiding any adverse impact on the capacity of the silicon-carbon negative electrode material.

In some embodiments, the above carbon coating step may be performed at a temperature of 580°C to 800°C, optionally 650°C to 750°C, but is not limited thereto.

In some embodiments, the above carbon coating step can be performed under a pressure of 100 Pa to 2000 Pa, optionally 200 Pa to 500 Pa, but is not limited thereto.

In some embodiments, the duration of introducing the second mixed gas including the carbon source gas and the second inert gas may be 2 h to 12 h, optionally 2 h to 10 h, but is not limited thereto.

Through the above steps, a uniform and dense carbon coating layer can be formed on the surface of the silicon-carbon negative electrode material. The carbon coating layer can improve the conductivity of the silicon-based material. In addition, the carbon coating layer can also isolate the liquid electrolyte from contact with the silicon-based material, reducing the occurrence of side reactions, which is beneficial to forming a stable and uniform solid electrolyte interphase film.

In some embodiments, the carbon source gas may include one or more of acetylene, ethylene, propylene, methane, ethane, or propane, but is not limited thereto.

In some embodiments, the second inert gas may include one or more of nitrogen, argon, helium, or neon, but is not limited thereto.

The present disclosure also proposes a silicon-carbon negative electrode material. The silicon-carbon negative electrode material is prepared by the method of the second aspect of the present disclosure. The silicon-carbon negative electrode material has one or more characteristics identical to those of the silicon-carbon negative electrode material of the first aspect of the present disclosure, and can produce the same technical effects.

In addition, the secondary battery and electrical device of the present disclosure are described below with appropriate reference to the accompanying drawings.

In some embodiments of the present disclosure, a secondary battery is provided.

The term "secondary battery" mentioned herein refers to a battery cell, a battery module, or a battery pack. The following describes them separately.

Typically, a battery cell includes a positive electrode sheet, a negative electrode sheet, an electrolyte, and a separator. During battery charging and discharging, active ions are intercalated and deintercalated between the positive electrode sheet and the negative electrode sheet. The electrolyte plays a role of conducting ions between the positive electrode sheet and the negative electrode sheet. The separator is provided between the positive electrode sheet and the negative electrode sheet, mainly playing a role of preventing short circuit between the positive and negative electrodes, and also allowing ions to pass through.

### Positive electrode sheet

The positive electrode sheet includes a positive electrode current collector and a positive electrode film layer provided on at least one surface of the positive electrode current collector, and the positive electrode film layer includes a positive electrode active material.

As an example, the positive electrode current collector has two opposite surfaces in its own thickness direction, and the positive electrode film layer is provided on either or both of the two opposite surfaces of the positive electrode current collector.

In some embodiments, the positive electrode current collector may adopt a metal foil or a composite current collector. For example, an aluminum foil may be used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In some embodiments, under the condition that the battery cell is a lithium-ion battery, the positive electrode active material may be a well-known positive electrode active material used for lithium-ion batteries in the art. For example, the positive electrode active material may include one or more of the following materials: olivine-structured lithium-containing phosphate, lithium transition metal oxide, or respective modified compounds thereof. However, the present disclosure is not limited to such materials, and other conventional materials that can be used as battery positive electrode active materials may alternatively be used. These positive electrode active materials may be used alone or in combination of two or more. Examples of lithium transition metal oxides may include, but are not limited to, one or more of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (such as LiNi_{0.85}Co_{0.1}Al_{0.05}O₂) and their modified compounds. Examples of the olivine-structured lithium-containing phosphate may include, but are not limited to, one or more of lithium iron phosphate (such as LiFePO₄ (also abbreviated as LFP)), composite materials of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, deintercalation and consumption of Li are accompanied during battery charging and discharging, and the battery has a different molar concentration of Li when discharged to a different state. In the enumeration of positive electrode active materials in the present disclosure, the molar concentration of Li refers to an initial state of the material, that is, the state before feeding, and after the positive electrode active material is applied to the battery system and undergoes charging and discharging cycles, the molar concentration of Li may change.

In the enumeration of positive electrode active materials in the present disclosure, the molar concentration of O is only a theoretical state value, and lattice oxygen release causes changes in the molar concentration of oxygen, and the actual molar concentration of O fluctuates.

In some embodiments, the positive electrode film layer may further optionally include a binder. In an example, the binder may include one or more of polyvinylidene fluoride (PVDF), polytetrafluoroethylene (PTFE), vinylidene fluoride-hexafluoropropylene-tetrafluoroethylene terpolymer, vinylidene fluoride-hexafluoropropylene-tetrafluoroethylene terpolymer, tetrafluoroethylene-hexafluoropropylene copolymer, and fluorinated propylene acrylate resin.

In some embodiments, the positive electrode film layer may further optionally include a conductive agent. In an example, the conductive agent may include one or more of superconducting carbon, acetylene black, carbon black, Ketjenblack, carbon dots, carbon nanotubes, graphene, and carbon nanofibers.

In some embodiments, the positive electrode sheet may be prepared in the following manner: dispersing the above components such as the positive electrode active material, the conductive agent, the binder, and any other components for preparing the positive electrode sheet into a solvent (such as N-methylpyrrolidone) to form a positive electrode slurry; and coating the positive electrode slurry on a positive electrode current collector, and performing processes such as drying and cold pressing to obtain a positive electrode sheet.

### Negative electrode sheet

The negative electrode sheet includes a negative electrode current collector and a negative electrode film layer provided on at least one surface of the negative electrode current collector, and the negative electrode film layer includes the silicon-carbon negative electrode material of the first aspect of the present disclosure or the silicon-carbon negative electrode material prepared by the method of the second aspect of the present disclosure as a negative electrode active material.

In an example, the negative electrode current collector has two opposite surfaces in its own thickness direction, and the negative electrode film layer is provided on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material base layer and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In addition to the silicon-carbon negative electrode material of the first aspect of the present disclosure or a silicon-carbon negative electrode material prepared by the method of the second aspect of the present disclosure, the negative electrode active material may further include negative electrode active materials for batteries well known in the art. In an example, the negative electrode active material may further include one or more of the following materials: artificial graphite, natural graphite, soft carbon, hard carbon, silicon-based materials, tin-based materials, and lithium titanate. The silicon-based material may be selected from one or more of elemental silicon, silicon oxide compounds, silicon-carbon composites (referring to silicon-carbon composites other than the silicon-carbon negative electrode material of the present disclosure), silicon-nitrogen composites, and silicon alloys. The tin-based material may be selected from one or more of elemental tin, tin oxide compounds, and tin alloys. However, the present disclosure is not limited to these materials, and other conventional materials that can be used as battery negative electrode active materials may alternatively be used. These negative electrode active materials may be used alone or in combination of two or more.

In some embodiments, the negative electrode film layer may further optionally include a binder. The binder may be selected from one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be selected from one or more of superconducting carbon, acetylene black, carbon black, Ketjenblack, carbon dots, carbon nanotubes, graphene, and carbon nanofibers.

In some embodiments, the negative electrode film layer may further optionally include other additives, such as a thickener (such as carboxymethyl cellulose sodium (CMC-Na)).

In some embodiments, the negative electrode sheet may be prepared in the following manner: dispersing the above components such as the negative electrode active material, conductive agent, binder, and any other components for preparing the negative electrode sheet in a solvent (such as deionized water) to form a negative electrode slurry; and coating the negative electrode slurry on the negative electrode current collector, and performing processes such as drying and cold pressing to obtain a negative electrode sheet.

### Electrolyte

The electrolyte plays a role of conducting ions between the positive electrode sheet and the negative electrode sheet. The electrolyte is not specifically limited to any particular type in the present disclosure, and may be selected depending on needs. For example, the electrolyte may be in a liquid state, a gel state, or an all-solid state.

In some embodiments, the electrolyte is a liquid electrolyte. The liquid electrolyte includes an electrolyte salt and a solvent.

In some embodiments, the electrolyte salt may be selected from one or more of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalate borate, lithium bis(oxalato)borate, lithium difluoro(dioxalato)phosphate, and lithium tetrafluoro(oxalato)phosphate.

In some embodiments, the solvent may be selected from one or more of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte may further optionally include an additive. For example, the additive may include a negative electrode film-forming additive, a positive electrode film-forming additive, and may also include an additive that can improve certain performance of the battery, such as an additive that improves the overcharge performance of the battery or an additive that improves the high or low temperature performance of the battery.

### Separator

In some embodiments, the battery cell further includes a separator. The present disclosure has no particular limitation on the type of separator, and any well-known porous structure separator with good chemical stability and mechanical stability can be selected.

In some embodiments, the material of the separator may be selected from one or more of glass fiber, non-woven fabric, polyethylene, polypropylene, and polyvinylidene fluoride. The separator may be a single-layer film or a multi-layer composite film, without particular limitation. When the separator is a multi-layer composite film, materials of layers may be the same or different, without particular limitation.

In some embodiments, the positive electrode sheet, negative electrode sheet, and separator can be made into an electrode assembly through a winding process or a lamination process.

In some embodiments, the battery cell may include an outer package. The outer package can be used to encapsulate the above electrode assembly and electrolyte.

In some embodiments, the outer package of the battery cell may be a hard shell, such as a hard plastic shell, aluminum shell, and steel shell. The outer package of the battery cell may alternatively be a soft package, for example, a soft pouch. The material of the soft package may be plastic, and examples of the plastic include polypropylene, polybutylene terephthalate, and polybutylene succinate.

The present disclosure has no particular limitation on the shape of the battery cell, which may be cylindrical, prismatic, or any other shape. For example, FIG. 2 is a battery cell 5 with a prismatic structure as an example.

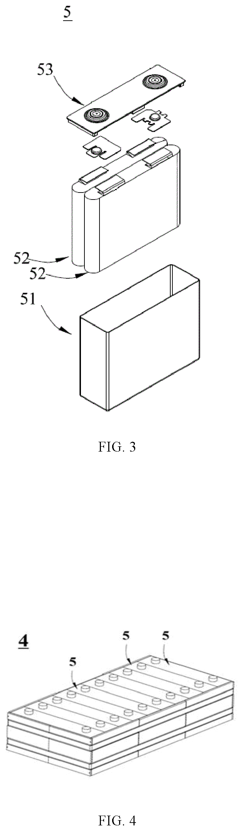

In some embodiments, referring to FIG. 3, the outer package may include a housing 51 and a top cover assembly 53. The housing 51 may include a bottom plate and side plates connected to the bottom plate, and the bottom plate and side plates enclose an accommodating cavity. The housing 51 has an opening communicated with the accommodating cavity, and the top cover assembly 53 can cover the opening to close the accommodating cavity. The positive electrode sheet, negative electrode sheet, and separator can form an electrode assembly 52 by a winding process or a lamination process. The electrode assembly 52 is encapsulated in the accommodating cavity. The liquid electrolyte infiltrates into the electrode assembly 52. The number of electrode assemblies 52 contained in the battery cell 5 may be one or more, and those skilled in the art can select according to specific actual needs.

In some embodiments, battery cells can be assembled into a battery module, and the number of battery cells contained in the battery module may be one or more, and the specific number can be selected by those skilled in the art according to the application and capacity of the battery module.

FIG. 4 is a battery module 4 as an example. Referring to FIG. 4, in the battery module 4, a plurality of battery cells 5 may be arranged sequentially along the length direction of the battery module 4. Alternatively, the battery cells may be arranged in any other manner. Further, the plurality of battery cells 5 may be fastened by using fasteners.

Optionally, the battery module 4 may further include a housing with an accommodating space, and the plurality of battery cells 5 are accommodated in the accommodating space.

In some embodiments, the above battery module may alternatively be assembled into a battery pack, and the number of battery modules contained in the battery pack may be one or more, and the specific number can be selected by those skilled in the art according to the application and capacity of the battery pack.

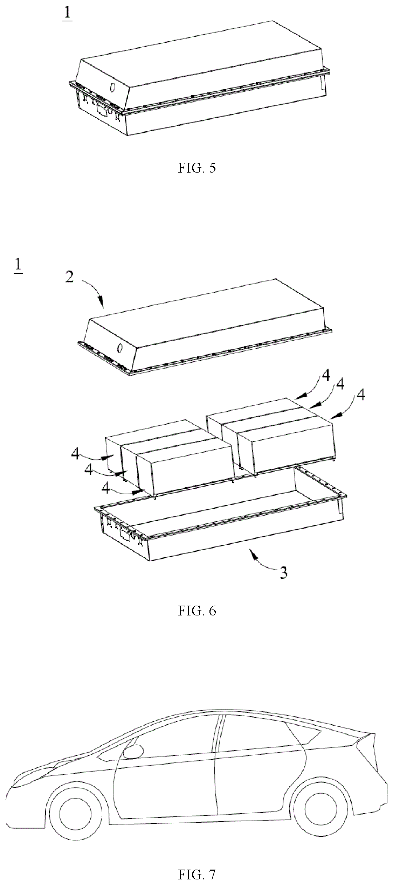

FIG. 5 and FIG. 6 are a battery pack 1 as an example. Referring to FIG. 5 and FIG. 6, the battery pack 1 may include a battery box and a plurality of battery modules 4 provided in the battery box. The battery box includes an upper enclosure 2 and a lower enclosure 3, and the upper enclosure 2 can cover the lower enclosure 3 and form a closed space for accommodating the battery modules 4. The plurality of battery modules 4 may be arranged in the battery box in any manner.

In addition, the present disclosure also provides an electrical device, and the electrical device includes the secondary battery provided by the present disclosure. The secondary battery may be used as a power source of the electrical device or as an energy storage unit of the electrical device. The electrical device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The secondary battery, the battery module, or the battery pack may be selected for the electrical device according to its usage needs.

FIG. 7 is an electrical device as an example. The electrical device is a battery electric vehicle, a hybrid electric vehicle, a plug-in hybrid electric vehicle, or the like. To meet the high power and high energy density requirements of the secondary battery for the electrical device, a battery pack or battery module may be used.

In another example, the device may be a mobile phone, a tablet computer, a notebook computer, or the like. Such a device usually requires light and thin design, and a battery cell may be used as the power source.

### Examples

The following describes examples of the present disclosure. The examples described below are illustrative and only used to explain the present disclosure, and cannot be construed as limitations on the present disclosure. Examples whose technical solutions or conditions are not specified are made in accordance with technical solutions or conditions described in literature in the field, or made in accordance with product instructions. Reagents or instruments used are all conventional products that are commercially available if no manufacturer is indicated.

Example 1: Preparation of silicon-carbon negative electrode material
(1) 2000g of biomass porous carbon matrix was taken and placed into a CVD deposition furnace. The temperature in the CVD deposition furnace was raised to 550°C at a heating rate of 5°C/min and held for 30 min. A first mixed gas including monosilane and nitrogen was introduced, with the gas partial pressure of monosilane being 0.33. The gas hourly space velocity of the first mixed gas was adjusted to 700 L/kg, and the pressure in the furnace was in a range of 1 kPa to 2 kPa. The gas introduction time was about 9 h.
(2) After a gas introduction time of about 9 h, the introduction of monosilane was stopped. Then, the temperature in the CVD deposition furnace was further raised to 700°C at a heating rate of 5°C/min. A second mixed gas including acetylene and nitrogen was introduced, with a gas partial pressure of acetylene being 0.5. The gas hourly space velocity of the second mixed gas was adjusted to 240 L/kg, and the pressure in the furnace was in a range of 200 Pa to 250 Pa. The gas introduction time was about 2 h. The product was then cooled, discharged, and sieved through a 325-mesh sieve to obtain a target silicon-carbon negative electrode material.

The total pore volume, the proportion of macropore pore volume, the proportion of mesopore pore volume, the proportion of micropore pore volume, the ratio of M_{Si}/M_{C}, the partial pressure of the silicon source gas, the gas hourly space velocity of the first mixed gas, and other parameters of the porous carbon matrix used in step (1) of Example 1 are shown in Table 1.

### Examples 2 to 11

Examples 2 to 11 were carried out in the same steps as Example 1, except that the parameters were adjusted as shown in Table 1.

### Comparative Examples 1 to 4

Comparative Examples 1 to 4 were carried out in the same steps as Example 1, except that the parameters were adjusted as shown in Table 1.

### Performance testing of silicon-carbon negative electrode material

### 1. Measurement of tap density

The tap density of the silicon-carbon negative electrode materials of each Example and Comparative Example was measured using a Dandong Better BT-301 powder tap density tester in accordance with GB/T 5162-2006.
(1) A powder sample having a volume of 21 mL to 24 mL was loaded into a 25 mL graduated cylinder with a known mass, and the total weight was weighed. The opening of the graduated cylinder was then sealed with a sealing film.
(2) The graduated cylinder containing the powder was fixed on a mechanical tapping device, a motor drove the mechanical tapping device to vibrate vertically up and down, such that the powder was gradually compacted. After a preset number of taps was reached, the vibration was stopped, and the volume indicated by the graduated cylinder was read. According to the definition of density: mass divided by volume, the density of the powder after tapping was calculated. Amplitude: 3.0+0.1 mm, tapping frequency: 250±15 times/min, and number of taps: 5000.

### 2. Measurement of specific surface area

With reference to the standard GB/T 19587-2017 Determination of the specific surface area of solids by gas adsorption using the BET method, the specific surface area of the material was measured using a nitrogen adsorption specific surface area analysis test method and calculated using a BET (Brunauer Emmett Teller) method. The nitrogen adsorption specific surface area analysis test was performed using a Tri Star II 3020 specific surface area and pore analyzer from Micromeritics Company in USA.

### 3. Measurement of content of porous carbon matrix

The carbon element content in the material was measured with reference to GB/T 20123-2006/ISO 15350:2000. The testing instrument was an HCS-140 high-frequency infrared carbon sulfur analyzer from Shanghai Dekai Instrument Co., Ltd.

After surface passivation of the product obtained in step (1), the product was taken out from the deposition furnace, and the carbon element content in the product was measured using a carbon sulfur analyzer, thereby determining the content of the porous carbon matrix relative to the product. The silicon-carbon negative electrode material obtained in step (2) was tested using the carbon sulfur analyzer, thereby determining the carbon element content in the silicon-carbon negative electrode material, that is, the sum of the carbon contents in the porous carbon matrix and the carbon coating layer relative to the silicon-carbon negative electrode material. Through calculation, the content of the porous carbon matrix relative to the silicon-carbon negative electrode material can be obtained.

### 4. Measurement of silicon content

The silicon element content in the material was tested with reference to EPA 6010D-2014 inductively coupled plasma atomic emission spectrometry.

### 5. Measurement of true density

The true density of the silicon-carbon negative electrode material was measured with reference to the method in GB/T 24586-2009.

A certain mass of sample was weighed and placed into a sample cup with a known volume, and the sample cup containing the sample was placed into a true density tester (AccuPyc II 1340). The test system was sealed, and helium gas was introduced according to a programmed procedure. By detecting the gas pressure in the sample chamber and the expansion chamber, and then according to the gas law, the true volume of the sample was obtained. The true density was calculated by dividing the sample mass by the sample volume.

### Preparation of button cell

The above silicon-carbon negative electrode material, conductive carbon black, and binder polyacrylic acid were mixed in a mass ratio of 8:1:1, followed by addition of a solvent of deionized water. The mixture was stirred under the action of a high-speed mixer until the system was uniform, to obtain a negative electrode slurry with a solid content of 45%. The negative electrode slurry was uniformly coated on a negative electrode current collector copper foil, which then was dried at 85°C and cold pressed to obtain an electrode sheet. Metal lithium was used as the counter electrode, Celgard 2400 separator was adopted, and a liquid electrolyte was injected to assemble a button cell. The liquid electrolyte was an organic solvent mixture of ethylene carbonate (EC), methyl ethyl carbonate (EMC), and diethyl carbonate (DEC), where the volume ratio of EC, EMC, and DEC was 20:20:60. Then, LiPF₆ was dissolved in the above organic solvent, and additive fluoroethylene carbonate (FEC) was added, where the concentration of LiPF₆ was 1 mol/L, and the mass proportion of FEC in the liquid electrolyte was 5%.

### Measurement of initial coulombic efficiency

After standing for 60 min, the assembled button cell was tested according to the following procedure: constant-current discharged at 0.05C to 5 mV, discharged at 50 µA to 5 mV, standing for 10 min, and charged at 0.1C to 0.8 V. The lithium intercalation specific capacity of the silicon-carbon negative electrode material was the specific capacity C1 obtained upon discharge to 5 mV, the lithium deintercalation specific capacity of the silicon-carbon negative electrode material was the specific capacity C2 obtained upon charge to 0.8V, and the initial Coulombic efficiency of the silicon-carbon negative electrode material was C2/C1.

### Preparation of secondary battery

### 1. Preparation of positive electrode sheet

The positive electrode active material LiNi_{0.8}Co_{0.1}Mn_{0.1}O₂ (NCM₈₁₁), conductive carbon black, and binder polyvinylidene fluoride (PVDF) were fully stirred and mixed in a weight ratio of 93:2:5 in an appropriate amount of N-methylpyrrolidone (NMP) solvent to form a uniform positive electrode slurry. The positive electrode slurry was coated on a surface of the positive electrode current collector, followed by drying and other processes, to obtain a positive electrode sheet.

### 2. Preparation of negative electrode sheet

The silicon-carbon negative electrode material prepared in each example or comparative example above, artificial graphite, conductive carbon black, thickener carboxymethyl cellulose sodium (CMC-Na), and binder styrene-butadiene rubber emulsion (SBR) were fully stirred and mixed in a weight ratio of 18:77.5:1.3:1.2:2 in an appropriate amount of deionized water to form a uniform negative electrode slurry. The negative electrode slurry was coated on a negative electrode current collector, followed by drying and other processes, to obtain a negative electrode sheet.

### 3. Preparation of liquid electrolyte

Ethylene carbonate (EC), methyl ethyl carbonate (EMC), and diethyl carbonate (DEC) were mixed in a volume ratio of 1:1:1 to obtain an organic solvent, and then fully dried lithium salt LiPF₆ was dissolved in the mixed organic solvent to prepare a liquid electrolyte with a concentration of 1 mol/L.

### 4. Separator

The separator was a 12µm thick polypropylene (PP) porous membrane.

### Preparation of secondary battery

The positive electrode sheet, separator, and negative electrode sheet were sequentially stacked, then wound into an electrode assembly and loaded into an outer package, the above liquid electrolyte was injected, followed by processes such as sealing, standing, hot and cold pressing, and formation, to obtain a secondary battery.

### Performance test of secondary battery

### 1. Cycling performance test

At 45°C, the secondary batteries prepared in each example and comparative example were charged at a constant current at a rate of 1C to a charge cutoff voltage of 4.25 V, followed by constant-voltage charging until the current was less than or equal to 0.05C. After standing for 5 min, the batteries were discharged at a constant current at a rate of 0.33C to a discharge cutoff voltage of 2.5 V, followed by standing for 5 min. The above process constituted one charge-discharge cycle. The batteries were subjected to repeated charge-discharge cycling according to the above method until the battery capacity decayed to 80%. The number of cycles at this point was defined as the cycle life of the battery.

### 2. Full-charge expansion ratio test

The secondary batteries prepared in each example and comparative example were taken, and the thickness of the negative electrode sheet was measured and recorded as D0. The secondary batteries prepared in each example and comparative example were charged at a constant current at a rate of 1C to a cutoff voltage of 4.25 V, and the thickness of the negative electrode sheet at this time was measured and recorded as D1.$The initial full - charge expansion ratio = \left(D1-D0\right) / D 0 \times 100 % .$

**Table 1: Process parameters used in step (1) of preparation of silicon-carbon negative electrode material**

| No. | Porous carbon matrix | | | | M_{Si}/M_{C} | Silicon source gas partial pressure | Gas hourly space velocity (L/kg) |
|---|---|---|---|---|---|---|---|
| | Macropore (%) | Mesopore (%) | Micropore (%) | PVₜₒₜₐₗ (cm³/g) | | | |
| Example 1 | 4% | 62% | 34% | 0.84 | 0.82 | 0.33 | 700 |
| Example 2 | 4% | 62% | 34% | 0.84 | 0.80 | 0.33 | 700 |
| Example 3 | 4% | 62% | 34% | 0.84 | 0.93 | 0.33 | 700 |
| Example 4 | 4% | 62% | 34% | 0.84 | 0.82 | 0.40 | 700 |
| Example 5 | 4% | 62% | 34% | 0.84 | 0.86 | 0.50 | 700 |
| Example 6 | 4% | 62% | 34% | 0.84 | 0.86 | 0.70 | 700 |
| Example 7 | 4% | 62% | 34% | 0.84 | 0.82 | 0.33 | 600 |
| Example 8 | 4% | 62% | 34% | 0.84 | 0.82 | 0.33 | 1050 |
| Example 9 | 7% | 60% | 33% | 1.02 | 0.82 | 0.33 | 700 |
| Example 10 | 3% | 74% | 23% | 0.89 | 0.82 | 0.33 | 700 |
| Example 11 | 2% | 65% | 33% | 0.92 | 0.82 | 0.33 | 700 |
| Comparative Example 1 | 4% | 62% | 34% | 0.84 | 0.82 | 0.18 | 700 |
| Comparative Example 2 | 4% | 62% | 34% | 0.84 | 0.82 | 0.33 | 1300 |
| Comparative Example 3 | 4% | 62% | 34% | 0.84 | 1.00 | 0.33 | 700 |
| Comparative Example 4 | 2% | 80% | 18% | 0.78 | 0.82 | 0.33 | 700 |

In Table 1, M_{Si}/M_{C} represents the mass ratio of the introduced silicon source gas to the porous carbon matrix based on the mass of silicon element.

**Table 2: Performance parameters of silicon-carbon negative electrode material**

| No. | C_{Si} (%) | Cc (%) | PV_{closed} (cm³/g) | V_{Si} (cm³/g) | PVₒₚₑₙ (cm³/g) | Silicon crystallite size (nm) | Specific surface area (m²/g) | ρₜₐₚ (g/cm³) | ρₜᵣᵤₑ (g/cm³) |
|---|---|---|---|---|---|---|---|---|---|
| Example 1 | 38% | 54% | 0.265 | 0.163 | 0.026 | 4.5 | 7.0 | 0.66 | 2.02 |
| Example 2 | 37% | 55% | 0.265 | 0.159 | 0.038 | 4.4 | 10.0 | 0.61 | 2.03 |
| Example 3 | 40% | 53% | 0.255 | 0.172 | 0.019 | 4.6 | 6.0 | 0.69 | 1.99 |
| Example 4 | 38% | 54% | 0.274 | 0.163 | 0.017 | 4.6 | 5.4 | 0.67 | 2.01 |
| Example 5 | 38% | 53% | 0.266 | 0.163 | 0.016 | 4.7 | 5.0 | 0.63 | 2.01 |
| Example 6 | 39% | 51% | 0.253 | 0.167 | 0.008 | 4.9 | 2.5 | 0.64 | 2.00 |
| Example 7 | 38% | 54% | 0.274 | 0.163 | 0.017 | 4.5 | 5.8 | 0.66 | 2.01 |
| Example 8 | 38% | 54% | 0.269 | 0.163 | 0.022 | 4.3 | 6.3 | 0.66 | 2.03 |
| Example 9 | 38% | 54% | 0.349 | 0.163 | 0.039 | 4.4 | 10.0 | 0.63 | 1.99 |
| Example 10 | 38% | 54% | 0.287 | 0.163 | 0.031 | 4.5 | 8.2 | 0.71 | 2.01 |
| Example 11 | 38% | 54% | 0.300 | 0.163 | 0.034 | 4.3 | 8.8 | 0.65 | 2.01 |
| Comparative Example 1 | 38% | 54% | 0.220 | 0.163 | 0.071 | 2.2 | 69.0 | 0.68 | 2.01 |
| Comparative Example 2 | 38% | 54% | 0.232 | 0.163 | 0.059 | 2.4 | 52.0 | 0.64 | 2.01 |
| Comparative Example 3 | 44% | 51% | 0.232 | 0.189 | 0.008 | 4.1 | 2.0 | 0.61 | 1.99 |
| Comparative Example 4 | 38% | 54% | 0.237 | 0.163 | 0.021 | 4.4 | 6.2 | 0.73 | 1.99 |

In Table 2, ρₜₐₚ represents the tap density of the silicon-carbon negative electrode material, and ρₜᵣᵤₑ represents the true density of the silicon-carbon negative electrode material.

**Table 3: Electrochemical performance parameter test results**

| No. | Button cell | Secondary battery | |
|---|---|---|---|
| | Initial coulombic efficiency (%) | 45°C Cycle life | Initial full-charge expansion ratio (%) |
| Example 1 | 90.6% | 1314 | 36 |
| Example 2 | 88.4% | 1280 | 35 |
| Example 3 | 90.8% | 1100 | 39 |
| Example 4 | 90.2% | 1180 | 35 |
| Example 5 | 89.9% | 1150 | 36 |
| Example 6 | 89.8% | 1042 | 34 |
| Example 7 | 90.4% | 1244 | 35 |
| Example 8 | 90.2% | 1258 | 36 |
| Example 9 | 88.2% | 1214 | 39 |
| Example 10 | 90.2% | 1010 | 35 |
| Example 11 | 88.9% | 1244 | 40 |
| Comparative Example 1 | 76.2% | 1100 | 42 |
| Comparative Example 2 | 78.1% | 1230 | 43 |
| Comparative Example 3 | 85.0% | 1329 | 47 |
| Comparative Example 4 | 88.0% | 950 | 34 |

From the above results, it can be seen that the silicon-carbon negative electrode materials prepared in Examples 1 to 11 all satisfy the present disclosure, and the battery can simultaneously achieve relatively high initial Coulombic efficiency and high-temperature cycle life, and relatively low cycle expansion ratio.

The silicon-carbon negative electrode materials prepared in Comparative Examples 1 to 4 cannot simultaneously satisfy the structural feature limitations of the present disclosure, so they cannot make the battery simultaneously achieve relatively high initial Coulombic efficiency and high-temperature cycle life, and relatively low cycle expansion ratio. Specifically, in Comparative Example 1, PV_{closed} is less than 0.250 cm³/g, mainly due to the partial pressure of the silicon source gas being less than 0.3; in Comparative Example 2, PV_{closed} is less than 0.250 cm³/g, mainly due to the gas hourly space velocity of the first mixed gas including monosilane and nitrogen being greater than 1200 L/kg; in Comparative Example 3, PV_{closed} is less than 0.250 cm³/g, and V_{Si} is greater than 0.175 cm³/g, mainly due to the mass ratio of the introduced monosilane to the porous carbon matrix being greater than 0.95; in Comparative Example 4, PV_{closed} is less than 0.250 cm³/g, mainly due to the mesopore pore volume proportion in the porous carbon matrix being greater than 75%. Therefore, the materials in Comparative Examples 1 to 4 cannot make the battery simultaneously achieve relatively high initial Coulombic efficiency and high-temperature cycle life, and relatively low cycle expansion ratio.

It should be noted that the present disclosure is not limited to the above embodiments. The above embodiments are only examples, and embodiments having substantially the same configuration as the technical ideas within the scope of the technical solution of the present disclosure and exerting the same operational effects are all included in the technical scope of the present disclosure. In addition, without departing from the essence of the present disclosure, various modifications made to the embodiments that can be conceived by those skilled in the art, and other manners constructed by combining some constituent elements according to the embodiments are also included in the scope of the present disclosure.

## Claims

1. A silicon-carbon negative electrode material, comprising a porous carbon matrix and a silicon-based material present in pores of the porous carbon matrix; wherein a volume V_{Si} of the silicon-based material in a unit mass of the silicon-carbon negative electrode material is 0.155 cm³/g to 0.175 cm³/g, closed pores are contained in the silicon-carbon negative electrode material, and a volume PV_{closed} of the closed pores in a unit mass of the silicon-carbon negative electrode material is greater than or equal to 0.250 cm³/g.

2. The silicon-carbon negative electrode material according to claim 1, wherein
the volume V_{Si} of the silicon-based material in a unit mass of the silicon-carbon negative electrode material is 0.159 cm³/g to 0.172 cm³/g; and/or
the volume PV_{closed} of the closed pores in a unit mass of the silicon-carbon negative electrode material is 0.253 cm³/g to 0.300 cm³/g.

3. The silicon-carbon negative electrode material according to claim 1 or 2, wherein an open pore volume PVₒₚₑₙ of the silicon-carbon negative electrode material is 0.008 cm³/g to 0.040 cm³/g.

4. The silicon-carbon negative electrode material according to any one of claims 1 to 3, wherein the porous carbon matrix comprises mesopores, and a proportion of the mesopores in a total pore volume of the porous carbon matrix is 40% to 75%.

5. The silicon-carbon negative electrode material according to any one of claims 1 to 4, wherein a total pore volume of the porous carbon matrix is 0.5 cm³/g to 1.02 cm³/g.

6. The silicon-carbon negative electrode material according to any one of claims 1 to 5, wherein, relative to a total weight of the silicon-carbon negative electrode material, a content C_{Si} of the silicon-based material is 36wt% to 40wt%; and/or a content C_{C} of the porous carbon matrix is 50wt% to 57wt%.

7. The silicon-carbon negative electrode material according to any one of claims 1 to 6, wherein the silicon-based material comprises amorphous silicon or crystalline silicon.

8. The silicon-carbon negative electrode material according to claim 7, wherein the silicon-based material comprises crystalline silicon, and a crystallite size of the crystalline silicon is 3 nm to 6 nm.

9. The silicon-carbon negative electrode material according to any one of claims 1 to 8, wherein the silicon-carbon negative electrode material comprises one or more of the following features:
a true density of the silicon-carbon negative electrode material is 1.8 g/cm³ to 2.3 g/cm³;
a tap density of the silicon-carbon negative electrode material is 0.4 g/cm³ to 0.9 g/cm³;
a specific surface area of the silicon-carbon negative electrode material is 2.5 m²/g to 12 m²/g; and
a specific surface area of the porous carbon matrix is 1000 m²/g to 1800 m²/g.

10. The silicon-carbon negative electrode material according to any one of claims 1 to 9, wherein the silicon-carbon negative electrode material further comprises a carbon coating layer.

11. A method for preparing a silicon-carbon negative electrode material, wherein the method comprises:
providing a porous carbon matrix, wherein the porous carbon matrix comprises mesopores, and a proportion of the mesopores in a total pore volume of the porous carbon matrix is less than or equal to 75%;
placing the porous carbon matrix into a reactor;
introducing a first mixed gas comprising a silicon source gas and a first inert gas into the reactor, wherein a partial pressure of the silicon source gas is greater than or equal to 0.3, and, calculated based on a mass of silicon element, a mass ratio of the introduced silicon source gas to the porous carbon matrix is less than or equal to 0.95; and
adjusting a gas hourly space velocity of the first mixed gas to less than or equal to 1200 L/kg, under which condition a silicon-based material is deposited in pores of the porous carbon matrix, thereby obtaining the silicon-carbon negative electrode material; wherein
the silicon-carbon negative electrode material comprises a porous carbon matrix and a silicon-based material present in pores of the porous carbon matrix; a volume of the silicon-based material in a unit mass of the silicon-carbon negative electrode material is 0.155 cm³/g to 0.175 cm³/g, closed pores are contained in the silicon-carbon negative electrode material, and a volume of the closed pores in a unit mass of the silicon-carbon negative electrode material is greater than or equal to 0.250 cm³/g.

12. The method according to claim 11, wherein the proportion of the mesopores in a total pore volume of the porous carbon matrix is 40% to 75%.

13. The method according to claim 11 or 12, wherein, in the first mixed gas, the partial pressure of the silicon source gas is 0.3 to 0.7.

14. The method according to any one of claims 11 to 13, wherein the mass ratio of the introduced silicon source gas to the porous carbon matrix is 0.78 to 0.95.

15. The method according to any one of claims 11 to 14, wherein the gas hourly space velocity of the first mixed gas is adjusted to 500 L/kg to 1200 L/kg.

16. The method according to any one of claims 11 to 15, wherein
the total pore volume of the porous carbon matrix is 0.5 cm³/g to 1.02 cm³/g; and/or
a specific surface area of the porous carbon matrix is 1000 m²/g to 1800 m²/g.

17. The method according to any one of claims 11 to 16, wherein the method satisfies one or more of the following conditions (1) - (4):
(1) the silicon-based material is deposited in pores of the porous carbon matrix under a pressure of 1 kPa to 5 kPa;
(2) a deposition time of the silicon-based material is 5 h to 12 h;
(3) the silicon source gas comprises one or more of monosilane, disilane, trisilane, dichlorosilane, trichlorosilane, or tetrachlorosilane; and
(4) the first inert gas comprises one or more of nitrogen, argon, helium, or neon.

18. The method according to any one of claims 11 to 17, wherein the method further comprises: after depositing the silicon-based material, introducing a second mixed gas comprising a carbon source gas and a second inert gas into the reactor to form a carbon coating layer on a surface of the silicon-carbon negative electrode material; wherein
optionally, the carbon source gas comprises one or more of acetylene, ethylene, propylene, methane, ethane, or propane; and
optionally, the second inert gas comprises one or more of nitrogen, argon, helium, or neon.

19. A secondary battery, wherein the secondary battery comprises a negative electrode sheet, the negative electrode sheet comprises a negative electrode current collector and a negative electrode film layer located on at least one surface of the negative electrode current collector, the negative electrode film layer comprises the silicon-carbon negative electrode material according to any one of claims 1 to 10 or a silicon-carbon negative electrode material prepared by the method according to any one of claims 11 to 18.

20. An electrical device, the electrical device comprising the secondary battery according to claim 19.
